**Europäisches Patentamt**

**European Patent Office**

**Office européen des brevets**

(11) Veröffentlichungsnummer: **0 112 436**
A1

(12) **EUROPÄISCHE PATENTANMELDUNG**

(21) Anmeldenummer: **83108475.1**

(22) Anmeldetag: **29.08.83**

(51) Int. Cl.³: **G 11 B 23/02**

(30) Priorität: **23.12.82 DE 3247796**

(43) Veröffentlichungstag der Anmeldung: **04.07.84**
Patentblatt 84/27

(84) Benannte Vertragsstaaten: **AT BE CH DE FR GB IT LI NL SE**

(71) Anmelder: **idn inventions and development of novelties ag, Hartbertstrasse 9, CH-7002 Chur (CH)**

(72) Erfinder: **Ackeret, Peter, Allmendstrasse 18, CH-8700 Küsnacht (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Vorrichtung zum Aufbewahren flacher Aufzeichnungsträger.**

(57) Die Vorrichtung umfaßt ein Gehäuse (10) und einen Schieber (24) mit einer Frontwand (30), die die offene Gehäusefrontseite bei eingeschobenem Schieber (24) überdeckt. Ein Hebeorgan (62), das einen mittels des Schiebers (24) aus dem Gehäuse (10) heraustransportierten Aufzeichnungsträger (76) nahe der Frontwand (30) so weit anhebt, daß er erfaßt und herausgezogen werden kann, ist so ausgebildet, daß das Wiedereinlegen problemlos ohne Anforderungen an die Handfertigkeit oder Aufmerksamkeit des Benutzers möglich ist.

EP 0 112 436 A1

0 1 12/436

Vorrichtung zum Aufbewahren flacher Aufzeichnungsträger

-----------------------------------------------------------------------

Die Erfindung betrifft eine Vorrichtung zum Aufbewahren flacher Aufzeichnungsträger mit den im Oberbegriff des Patentanspruchs 1 genannten Merkmalen. Eine derartige Vorrichtung ist aus der US-PS 3 836 222 bekannt.

Die bekannte Vorrichtung umfasst ein gitterartiges Gestell, relativ zu dem die Schieber beweglich sind. Jeder Schieber besteht aus einem am Gestell geführten Klotz, der mit einer Platte verschraubt ist. Auf der Platte ist im gestellinneren Bereich ein Teil eines Verriegelungsmechanismus montiert, vor dem ein schachtelartiges Bauteil, das die Frontwand aufweist, auf der Platte befestigt ist. An diesem Bauteil ist eine Tasche angelenkt, die mit einem Fortsatz in einen im Gestell vorgesehenen Freiraum ragt, der beim Ausschub des Schiebers auf eine Traverse des Gestells aufläuft und dadurch die Tasche verschwenkt.

Die bekannte Vorrichtung hat den Hauptnachteil, dass sie sehr viel Platz beansprucht relativ zu der Grösse der aufzubewahrenden Aufzeichnungsträger, und sie ist aufgrund ihres komplizierten Aufbaus nur mit erheblichen Kosten herstellbar. Dagegen ist vorteilhaft, dass der Aufzeichnungsträger, bei dem es sich um die weit verbreiteten Compact-Kassetten handelt, leicht erfassbar ist und auch mit geringen Anforderungen an die Aufmerksamkeit des Benutzers manipulierbar ist.

- 2 -

0112436

Dieser Aspekt ist insbesondere dann von Bedeutung, wenn die Vorrichtung in einem Kraftfahrzeug von dessen Lenker benutzt werden soll.

Ein Behälter zur Aufbewahrung von Aufzeichnungsträgern, der in der DE-PS 22 48 408 beschrieben ist, weist den erwähnten Nachteil des grossen Platzbedarfs und der komplizierten Konstruktion nicht auf, erfordert jedoch bei der Handhabung eine gewisse Geschicklichkeit, die den Benutzer gegebenenfalls von der gebotenen Aufmerksamkeit beim Lenken eines Fahrzeugs abbringt.

Aufgabe der Erfindung ist es, einen Behälter mit den im Oberbegriff des Patentanspruchs 1 genannten Merkmalen so auszubilden, dass er problemlos benutzbar ist, das heisst mit minimalen Anforderungen an Geschick oder Aufmerksamkeit des Benutzers, jedoch zugleich einen minimalen Raumbedarf aufweist und kostengünstig aus wenigen Bauteilen gefertigt werden kann.

Die gemäss der Erfindung vorgesehene Lösung dieser Aufgabe ist im Patentanspruch 1 definiert; die Unteransprüche umreissen vorteilhafte Weiterbildungen dieses Grundgedankens.

Wie man erkennt, beruht diese Lösung nicht allein auf einer geschickten Kombination ausgewählter, aus dem Stand der Technik an sich bekannter Einzelmerkmale, sondern auch auf einer speziellen Ausgestaltung des Hebeorgans, das besonderen Anforderungen insbesondere bei der Einführung eines Aufzeichnungsträgers genügen muss.

Ausführungsbeispiele des Gegenstandes der Erfindung sind in den beigefügten Zeichnungen dargestellt und werden nachstehend unter Bezugnahme auf diese detailliert erläutert.

Fig. 1 zeigt in teilweise aufgebrochener Draufsicht eine erste Ausführungsform, bestimmt zur Unterbringung von drei Magnetbandkassetten,

Fig. 2 ist ein Schnitt nach Linie 2-2 der Fig. 1,

Fig. 3 ist eine Draufsicht auf das Hebeorgan dieser Ausführungsform,

Fig. 4 stellt perspektivisch eine zweite Ausführungsform dar,

Fig. 5 bis 7 zeigen in Schnittdarstellung Varianten der Hebeorganbetätigung,

Fig. 8 zeigt eine Variante der Ausführungsform nach Fig. 7 in analoger Darstellung,

Fig. 9 ist in schematischer Darstellung ein Schnitt parallel zur Frontwand der Vorrichtung nach Fig. 8,

Fig.10 zeigt eine weitere Ausführungsform, und zwar in Fig. 10a in fast geöffnetem, in Fig. 10b in vollständig geöffnetem Zustand,

Fig.11 zeigt in Draufsicht geschnitten eine Vorrichtung gemäss der Erfindung für die Aufbewahrung von Compactdiscs,

Fig.12 stellt in Draufsicht den zugehörigen Schieber dar,

Fig.13 zeigt in Teilschnittdarstellung die Anordnung von Aufnahmeplatten in der Aufbewahrungsposition,

Fig.14 zeigt analog zu Fig. 13 die Entnahmeposition, und

Fig.15 stellt in Seitenansicht, teilweise geschnitten, die geöffnete Vorrichtung dar.

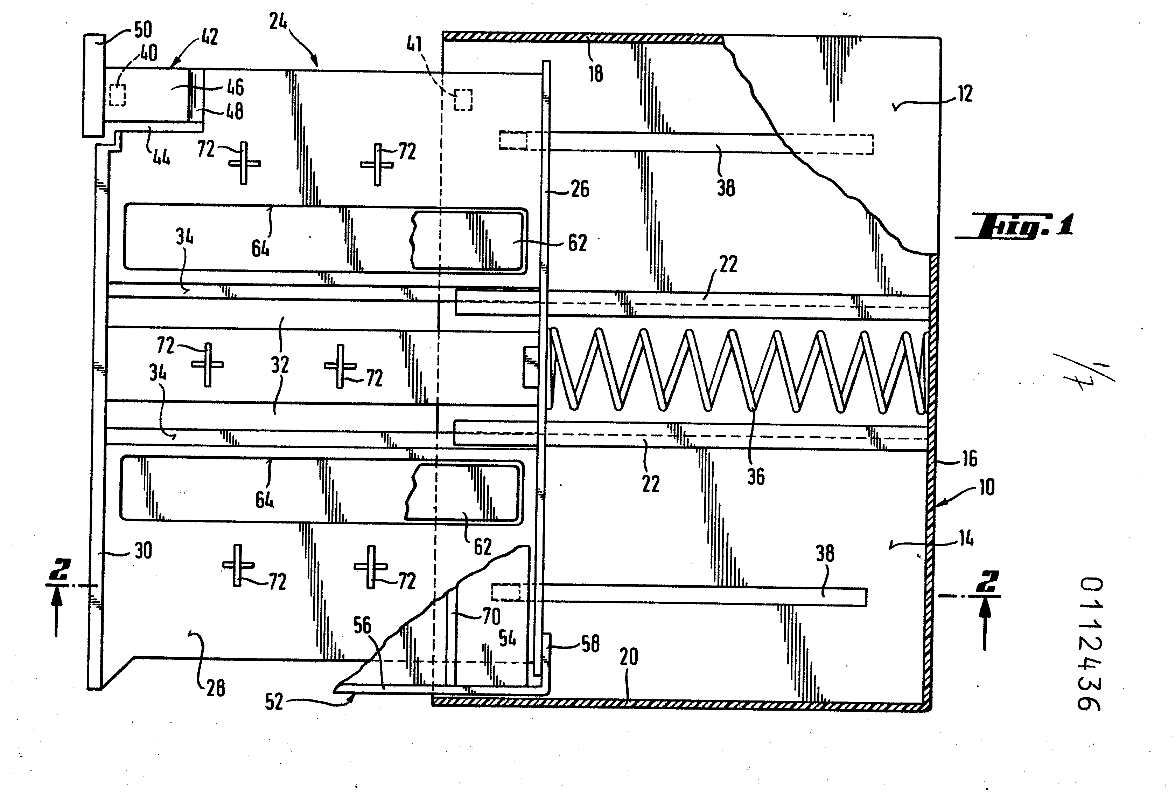

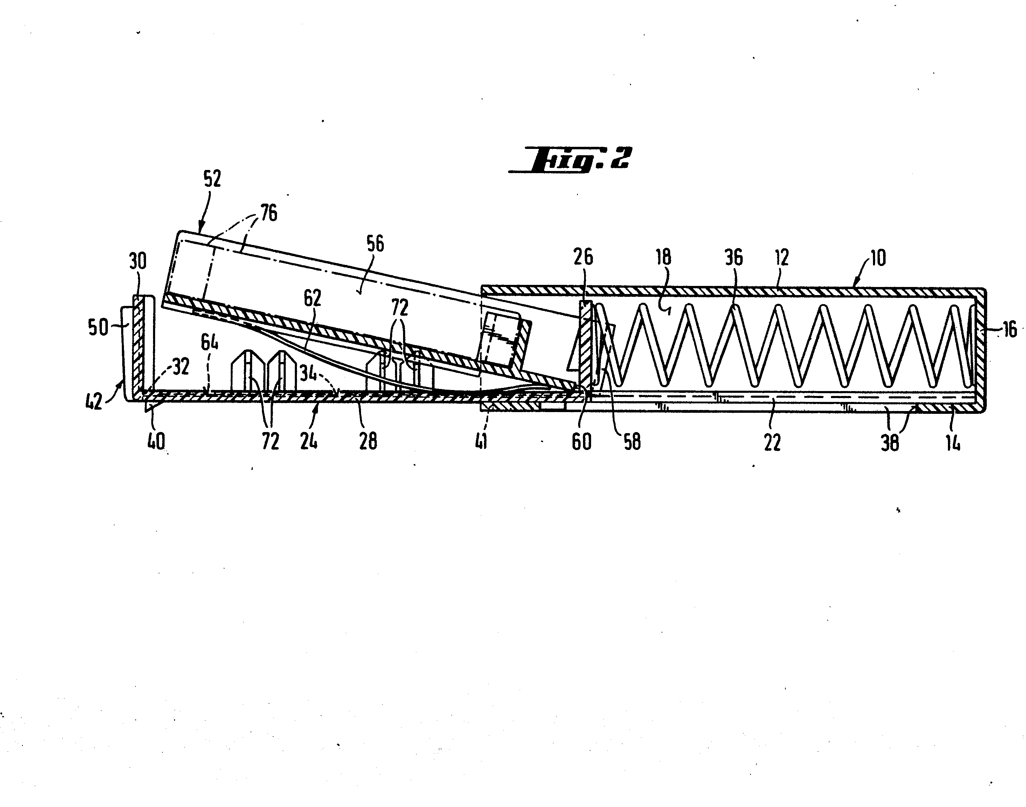

Die Vorrichtung nach Fig. 1 bis 3 umfasst ein Aussengehäuse 10 mit im wesentlichen quaderförmiger Grundform. Es weist eine Deckwand 12, eine Bodenwandung 14, eine Rückwand 16 und Seitenwandungen 18 und 20 auf, während die der Rückwand gegenüberliegende Seite des Gehäuses eine offene Frontseite bildet. Von der Rückwand 16 zur offenen Gehäuseseite erstrecken sich parallel zu den Seitenwandungen Schienen 22 längs der Bodenwandung. Die Schienen 22 definieren eine Führungsbahn für die Gleitbewegung eines Schiebers 24, der eine Rückplatte 26, eine Bodenplatte 28 und eine Frontplatte 30 umfasst. Zwei parallele Schlitze 32 erstrecken sich von der Rückplatte zur Frontplatte und unterteilen die Bodenplatte in drei einzelne Plattenelemente. Die Innenkanten der äusseren Plattenelemente sind abgestuft, wie bei 34 angedeutet, und die Schienen 22 übergreifen die Stufen und halten somit den Schieber. Eine zwischen Gehäuserückwand und Schieberrückplatte eingespannte Schraubendruckfeder spannt den Schieber in Ausfahrrichtung vor, also die in Fig. 1 und 2 dargestellte Position. An die Schieberbodenplatte sind gehäuseseitig Anschläge angeformt, die in Schlitzen 38 der Gehäusebodenwandung gleiten und den Ausschubhub begrenzen.

Der Schieber wird in seiner Aufbewahrungsposition, wenn er also in das Gehäuse eingeschoben ist, durch eine Verriegelung entgegen der Vorspannung der Feder 36 gehalten. Hierfür ist an die Schieberbodenplatte eine Raste 40 an der Unterseite einer Taste 42 angeformt, die von einem Schlitz 44 dadurch begrenzt wird, dass sich dieser durch die Frontplatte 30 in das betreffende Bodenplattenelement derart erstreckt, dass der Abschnitt 46 als Blattfeder wirkt, die mit dem Rest der Bodenplatte über einen Verbindungsabschnitt 48 verbunden ist. Diese Blattfeder trägt auch den Betätigungsknopf 50, der in etwa in der Ebene der Frontplatte liegt. Mittels des Knopfes kann der Benutzer die Raste 40 aus einer komplementären Eintiefung 41 in der Gehäusebodenwandung herausheben, wonach der Schieber von der Druckfeder 36 ausgestossen wird.

Der Betätigungsknopf schliesst zusammen mit der Schieberfrontplatte das Gehäuse an seiner offenen Seite im wesentlichen ab, wenn der Schieber eingeschoben und verriegelt ist.

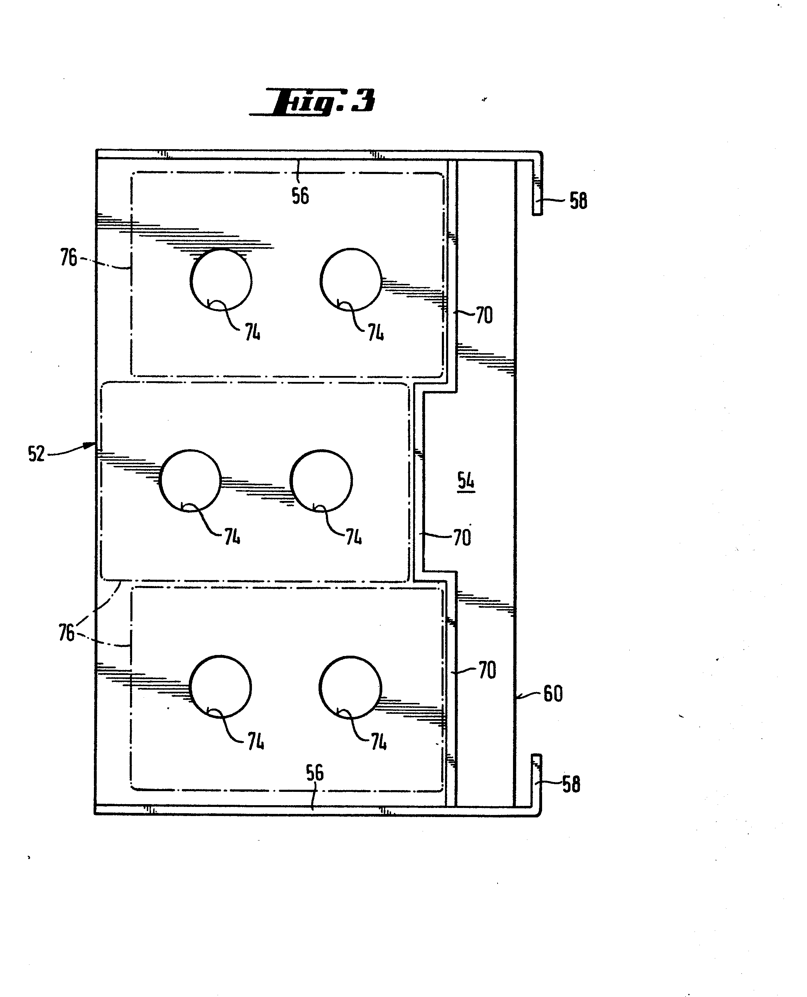

Die Rückplatte des Schiebers erstreckt sich hingegen nicht über die gesamte Gehäusebreite, so dass beidseits Freiräume verbleiben. Vor dem Montieren des Schiebers im Gehäuse wird an ihm ein Rahmenteil 52 angebracht, dessen Aufbau aus Fig. 3 entnehmbar ist. Es umfasst ein Kassettenhebeorgan 54 mit hochstehenden seitlichen Rändern 56, deren Aussenseiten voneinander einen Abstand haben, der etwas kleiner ist als die Innenbreite des Gehäuses zwischen dessen Seitenwandungen 18 und 20. Von den gehäuseinnenseitigen Enden dieser Ränder erstrecken sich Hakenabschnitte 58 einwärts zueinander, die einen bestimmten Abstand von der Querendkante 60 des Hebeorgans aufweisen. Der so begrenzte Spalt erlaubt das Aufsetzen des Rahmenteils 52 über die Enden der Rückplatte 26 des Schiebers derart, dass das Hebeorgan zwischen einer nach oben ausgeschwenkten Position gemäss Fig. 2, in der die Ränder 56 an der Frontkante der Gehäusedeckwandung 12 anschlagen, und einer niedergedrückten Winkellage beweglich ist, in der das Hebeorgan im wesentlichen parallel zu der Schieberbodenplatte 28 liegt.

Elastische Elemente spannen das Hebeorgan hier in die ausgeschwenkte Position vor. Zwei metallische Blattfedern 62 sind vorgesehen, die in komplementären Eintiefungen 64 der Schieberbodenplatte Platz finden, und drücken gegen die Unterseite des Hebeorgans 54, das seinerseits mit vorstehenden Rippen 66 versehen ist, um ein Herausfallen der Blattfedern 62 zu verhindern.

Ein solches loses Einlegen der metallischen Federn ist bevorzugt, wenn die übrigen Komponenten der Vorrichtung Kunststoffspritzteile sind. Man könnte natürlich auch die Blattfedern 62 aus Kunststoffmaterial fertigen, doch müsste man wegen der permanenten Auslenkung der Federn bei geschlossener Vorrichtung einen Kunststoff verwenden, der nicht zu Kaltfluss neigt, wobei sich erheblich höhere Kosten ergäben als bei Verwendung von Metallfedern. Ganz dasselbe gilt natürlich auch für die Ausschubfeder 36.

Auf der Oberseite des Hebeorgans sind hochstehende Anschläge 70 ausgebildet, an denen sich die Kassetten -- hier drei Kassetten -- abstützen können. Damit die Bandwickelnaben der Kassetten 76 in der Aufbewahrungsposition gegen Drehung gesichert sind, weist die Bodenplatte 28 des Schiebers hochstehende Sperrnocken 72 auf, die sich durch mit ihnen ausgefluchtete Löcher 74 des Hebeorgans 54 in die Wickelnaben erstrecken, wenn das Hebeorgan niedergedrückt ist. In der Ausschubposition des Schiebers sind die Kassetten mit ihrem äusseren Ende über das Niveau der freien Kante der Frontplatte gehoben, und zugleich kommen die Wickelnaben von den Sperrnocken frei, so dass die Kassetten nach vorn herausgezogen werden können.- Beim Wiedereinlegen der Kassetten ist keinerlei Geschicklichkeit erforderlich, da man sie einfach auf das Hebeorgan legen kann und dann auf die Schieberfrontplatte drückt, wodurch die Ränder 56 mit Keilwirkung an der Gehäusefrontkante nach unten gedrückt werden.

Nachdem das erste Ausführungsbeispiel sehr ausführlich erläutert wurde, kann bezüglich bestimmter Einzelheiten, wie Führungen, Anschläge, Ausschubfeder -- auf dieses verwiesen werden, während zu den weiteren Ausführungsformen nur jeweils charakteristische Details beschrieben werden.

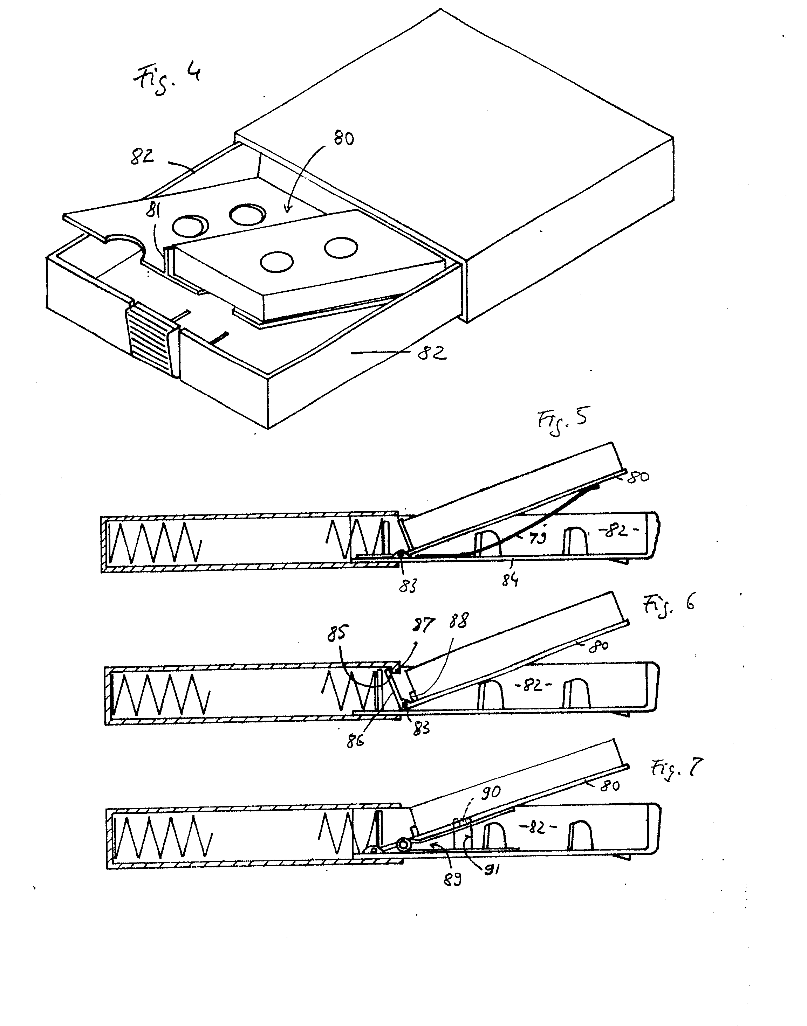

In Figur 4 erkennt man, dass abweichend von Fig. 1 bis 3 der Schieber für die Aufnahme von zwei Magnetbandkassetten ausgebildet ist, bei denen es sich zum Beispiel um standardisierte Videokassetten handeln kann. Das Hebeorgan 80 ist mit einem Trennsteg 81 versehen, und die Verriegelungsanordnung liegt in etwa in der Mitte der Schieberfrontplatte. Ausserdem ist der Schieber nicht mittels einer Schienenanordnung am Gehäuseboden geführt, sondern mittels seiner Seitenplatten 82 an den Gehäuseseitenwandungen.

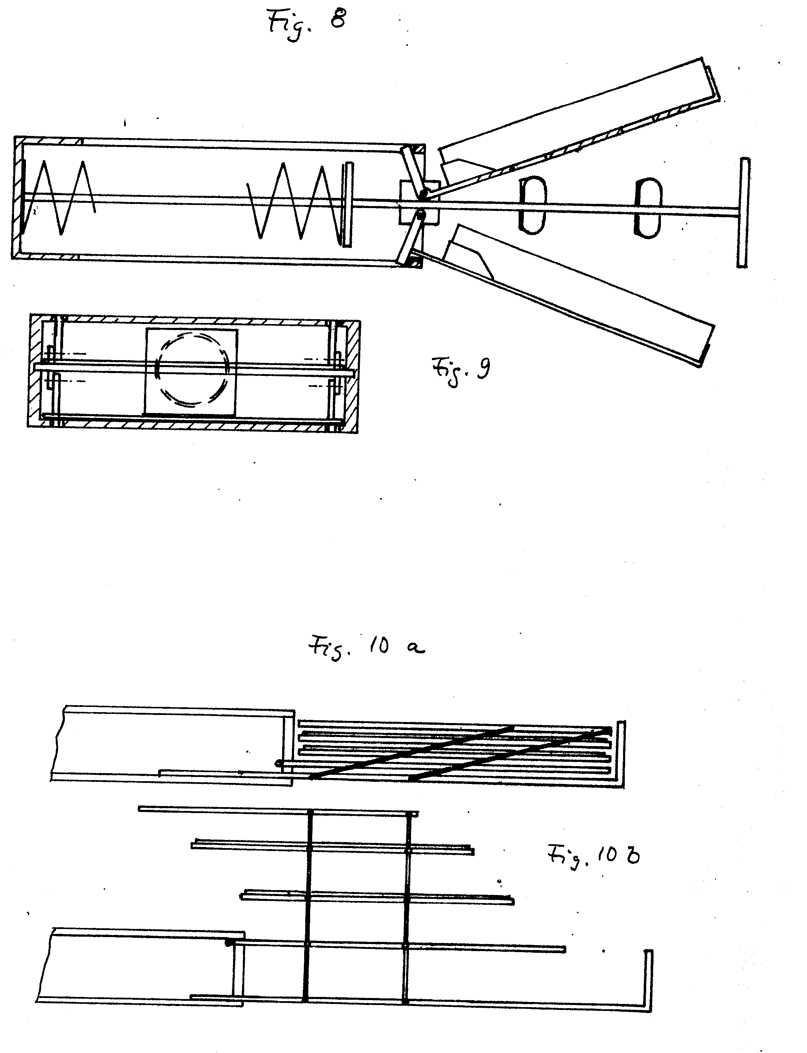

Die Figuren 5 bis 7 zeigen drei Möglichkeiten, wie das Hebeorgan 80 betätigbar ist.

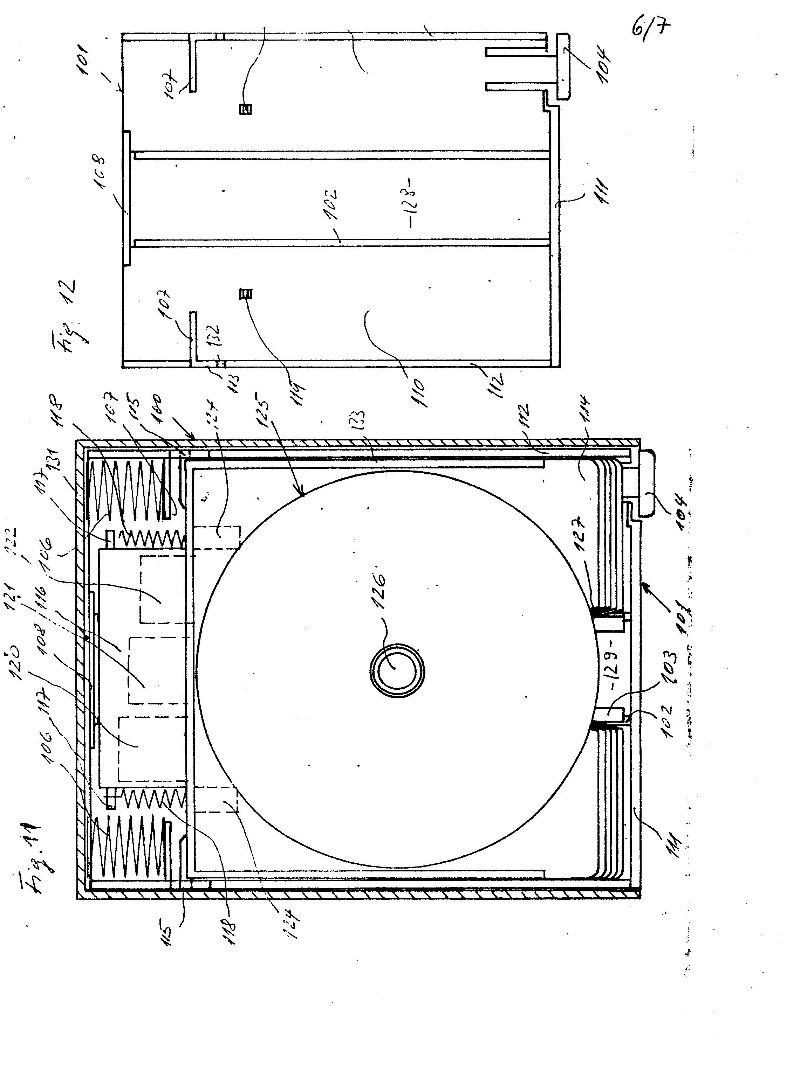

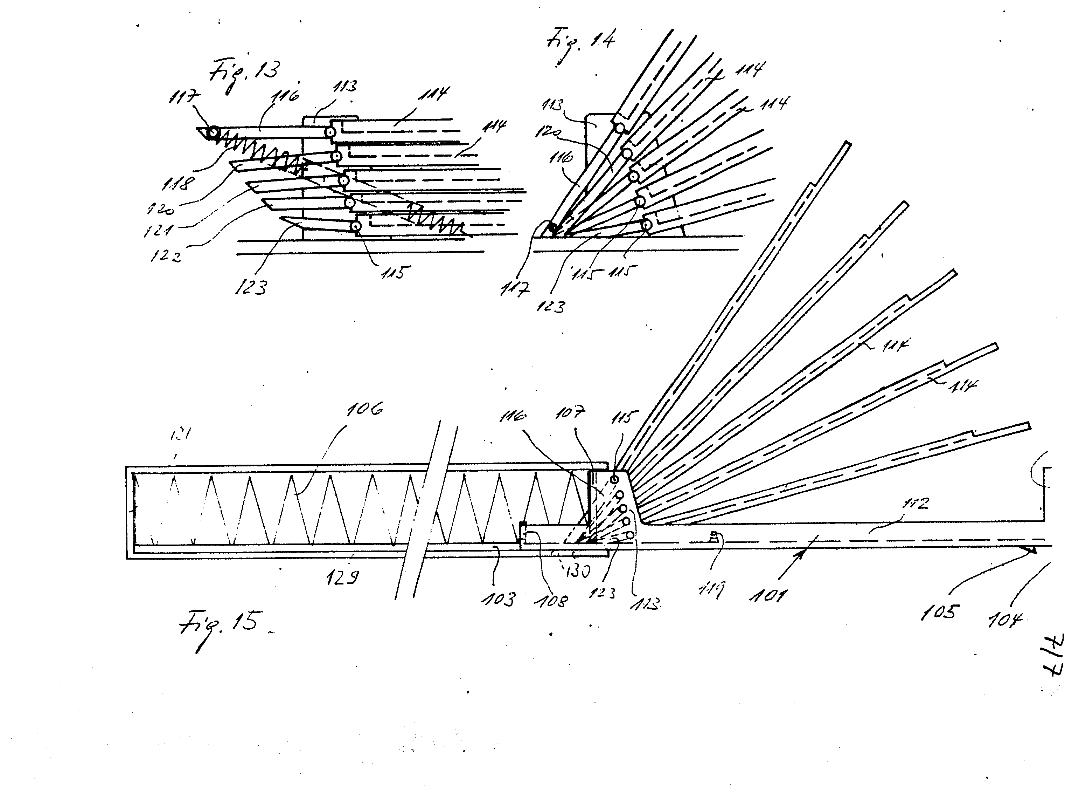

In Fig. 5 ist es mittels eines Zapfengelenks 83 mit dem Schieber 84 verbunden, und eine mit einem Ende am Schieberboden befestigte *79* Blattfeder drückt mit ihrem freien Ende das Hebeorgan mit dessen freiem Ende nach oben. Das Einlegen der Kassetten ist ersichtlich ebenso problemlos wie die Entnahme, und dies lässt sich im übrigen auch bei Fig. 6 und 7 erkennen.

In Fig. 6 läuft die freie Kante 85 der Hebeorgan-Innenwand 86 auf einen nach innen einspringenden Anschlagsteg 87 des Gehäuses, wodurch das Hebeorgan um sein Zapfenlager 83 verschwenkt wird. Die Kassette liegt dabei an einem Anschlag 88 an.

In Fig. 7 ist wieder eine Federvorspannung für das Hebeorgan vorgesehen, und zwar in Form einer Schenkelhalsfeder 89, deren einer Schenkel sich am Schieberboden und deren anderer Schenkel sich unten am Hebeorgan 80 abstützt. Der Hebewinkel wird dadurch begrenzt, dass sich seitlich Anschlagzapfen 90 vom Hebeorgan weg in Durchbrüche 91 der Schieberseitenplatte 82 erstrecken und an deren oberer Endkante zur Anlage kommen.

Fig. 8 und 9 zeigen eine Variante der Fig. 6. In einem Doppelgehäuse 200 ist in Rillen 201, die sich in der Symmetrieebene des Gehäuses befinden, ein Doppelschieber 202 geführt. Nach oben und unten, jeweils in den benachbarten Teil des Gehäuseinnenraums, erstrecken sich Paare von seitlichen Lagerböcken 203 von der Mittelplatte 204 des Schiebers, und in den Lagerböcken ist oben ein Hebeorgan 205 analog dem Hebeorgan 80 in Fig. 4 bis 7 um einen begrenzten Winkel schwenkbeweglich gelagert. In den unteren Lagerböcken ist spiegelsymmetrisch ein Pendelorgan 206 aufgehangen, bei dem eine zur Aufnahme einer oder mehrerer Kassetten 207 bemessene Platte 208 nahe dem freien Ende der Pendelplatte 209 sich nach aussen rechtwinklig wegerstreckt. Während sich das Hebeorgan 205 beim Einschub des Schiebers durch Schwerkraftwirkung absenkt, hebt sich dabei das Pendelorgan durch die Keilwirkung beim Auflaufen der Platte 208 auf die Gehäusefrontkante 210, die zugleich die Abwärtsschwenkbewegung begrenzt. Die Sperrnocken 211 sind spiegelsymmetrisch an die Schiebermittelplatte 204 angeformt; für die Kassette auf dem Hebeorgan greifen sie beim Absenken der Kassette durch die Durchbrüche 212 des Hebeorgans, während sie in die Bandwickelnaben der Kassette(n) auf dem Pendelorgan frei von oben eindringen können. Es versteht sich, dass hier eine Doppelfrontplatte 213 am äusseren Ende der Schiebermittelplatte 204 vorgesehen ist. Anschläge 214 verhindern das Abrutschen der Kassetten.

Während die bisher behandelten Ausführungsformen Vorrichtungen zum Aufbewahren von Magnetbandkassetten waren, dienen die beiden nachstehend beschriebenen Ausführungsformen der Unterbringung von Schall- oder Bildplatten, insbesondere der Aufbewahrung von standardisierten sogenannten Compactdiscs. Da diese eine im Verhältnis zu ihrem Durchmesser sehr geringe Dicke haben, sollen sie zur besseren Ausnutzung des Gehäuseinnenraums dicht gepackt in diesem unterbringbar sein, jedoch zur Entnahme bequem präsentiert werden.

Die Darstellung der Figuren 10a, 10b ist weitgehend schematisch. An den aus dem Gehäuse 300 herausschiebbaren Schieber 301 sind beidseits seiner Frontplatte Paare von Lenkern 302 angelenkt, schwenkbar um Achsen 303, die sich parallel zur Schieberfrontplatte erstrecken. Der Abstand der Achsenpaare und die Länge der Lenker sind so bemessen, dass in der Ausschubposition beide Lenker frei nach oben schwenken können, in der Aufbewahrungsposition jedoch soweit eingeschwenkt sind, dass ein oberster Plattenhalter 304, an den die freien Enden der Lenker ebenfalls mit gleichem Achsabstand angelenkt sind, noch unter die Gehäusedeckwand 305 passt. Die übrigen Plattenhalter 306, 307 und 308 sind in identischer Weise angelenkt, wobei aber natürlich bei gleichem Achsabstand die Entfernung der Achsen von der Frontplatte 309 des Schiebers immer grösser wird. Der unterste Plattenhalter erstreckt sich auch in der geöffneten Position in das Gehäuse 300 hinein und hintergreift mit Nockenfortsätzen 312, die seitlich vom Plattenhalter abstehen, seitlich neben der offenen Gehäusefront von deren Seitenwandungen 310 nach innen ragende Steuerstege 311. Längs diesen gleiten die Nockenfortsätze nach oben, sobald sie beim Ausschub des Schiebers auf die Steuerstege treffen, wodurch die von den Lenkern und den an sie angelenkten Plattenhalter gebildete Parallelogrammanordnung in die Entfaltungsposition gemäss Fig. 10b gehoben wird. In dieser Position haben die einzelnen Plattenhalter einen hinreichend grossen Abstand, dass die auf ihnen liegenden Compactdiscs 313 von oben mit dem Finger berührt und nach vorn geschoben werden können; gegebenenfalls kann man auch die Disc-Halter vorn mit einem Ausschnitt versehen. Ausserdem sind die Halter nach hinten gestaffelt, so dass der Zugriff weiter erleichtert wird.

Das letzte Ausführungsbeispiel wird wieder etwas mehr ins einzelne gehend erläutert, da es eine Reihe besonderer Merkmale aufweist.

In dem Gehäuse 100 ist gleitbeweglich ein Schieber 101 geführt. Zu diesem Zweck besteht der Schieber aus zwei Bodenplatten 109 und 110, die frontseitig durch eine Frontplatte 111 und rückseitig durch eine Rückplatte 108 miteinander verbunden sind. In den Freiraum 128 zwischen den beiden Bodenplatten ragt von beiden eine Stufe 102, und vom Gehäuseboden 129 her ragen zwei Führungsschienen 103 nach innen und übergreifen diese Stufen. Die Bodenplatten 109, 110 sind durch hochstehende Seitenkanten 112 versteift, die nahe dem inneren Schieberende in Wangen 113 übergehen, welche an rechtwinklig zu ihnen verlaufende Lappen 107 anschliessen. Die Wangen 113 und die Lappen 117 haben eine Höhe derart, dass die lichte Weite des Gehäuses im wesentlichen ausgefüllt wird, wie in Fig. 15 erkennbar. Druckschraubenfedern 196 stützen sich einerseits an der Gehäuserückwand 131, andererseits an den Lappen 107 ab und drängen den Schieber aus dem Gehäuse heraus. In seiner Einschubstellung wird der Schieber 101 durch einen Riegel 105 gesichert, der in eine Ausnehmung 130 im Gehäuseboden 129 einrastet; der Riegel ist an einer Federtaste 104 angeformt und kann durch Anheben der Taste mittels Fingerdruck entriegelt werden; da der Schieber aus elastisch deformierbarem Kunststoff besteht, ist es ohne weiteres möglich, die Federtaste 104 aus dem Material der Bodenplatte 109 durch die in Fig. 12 erkennbaren Einschnitte zu separieren. Der Ausschubweg des Schiebers wird durch Anschläge begrenzt, die mit Gegenanschlägen im Gehäuse zusammenwirken.

In Lagerdurchbrüchen 132 der Wangen 113 sind Lagerzapfen 115 von Aufnahmeplatten 114 für je eine Kompaktschallplatte 125 (Compact-Disc) aufgenommen. Es sind hier insgesamt fünf Aufnahmeplatten übereinander angeordnet, und die einzelnen Aufnahmeplatten 114 unterscheiden sich durch die Form und Lage ihrer Hebelarme 116, 120, 121, 122 und 123. Der Hebelarm 116 der obersten Aufnahmeplatte 114 erstreckt sich im wesentlichen über die Breite des Schiebers zwischen den Federn 196; er weist an seinem Ende zwei sich seitlich wegerstreckende Stifte oder Haken 117 auf, an denen je eine Zugfeder 118 eingehangen ist. Die jeweils anderen Enden der Zugfedern 118 sind an Oesen 119 verankert, die von den Bodenplatten 109, 110 des Schieber hochstehen. Wird demgemäss der Schieber 101 entriegelt und durch die Federn 106 aus dem Gehäuse 100 herausgeschoben, so wirkt auf den Hebelarm 116 ein Drehmoment, erzeugt durch die Vorspannung der Federn 118, und die oberste Aufnahmeplatte 114 wird in die in Fig. 15 dargestellte Position verschwenkt.

Bei dieser Schwenkbewegung werden auch die übrigen Aufnahmeplatten aufgespreizt, indem der Hebelarm 116 der obersten Platte auf die nebeneinander gestaffel angeordneten Hebelarme 120, 121 und 122 einwirkt und diese mitnimmt. Da diese Hebelarme unterschiedliche Länge besitzen, ist ihr Aufspreizwinkel entsprechend geringer als der der obersten Platte 114. Für die unterste Aufnahmeplatte sind die Hebelverhältnisse für die Betätigung durch den Hebelarm 116 ziemlich ungünstig, und deshalb wird der Hebelarm 123 nicht vom Hebelarm 116, sondern von dem über ihm angeordneten Hebelarm 122 mitgenommen (vgl. Fig. 14). Die untersten drei Aufnahmeplatten weisen Ausschnitte 124 auf, damit die Zugfedern 118 Platz finden.

Die Lagesicherung der Schallplatten erfolgt durch zentrale Nabenfortsätze 126, von denen die Discs abgehoben werden können, indem man sie im Bereich der frontseitigen Ausschnitte 127 der Aufnahmeplatten erfasst. Ein Stützrand 133 der Aufnahmeplatten definiert ihren gegenseitigen Abstand in der Aufbewahrungsposition.

Patentansprüche

--------------------------------------------------

1) Vorrichtung zum Aufbewahren flacher Aufzeichnungsträger, wie Magnetbandkassetten und Compactschallplatten, mit einem Schieber, in dem mindestens ein Aufzeichnungsträger unterbringbar ist und der gleitbeweglich relativ zu einem Rahmen angeordnet ist, mittels einer Federanordnung in eine Oeffnungsposition vorgespannt ist und mittels einer Verriegelungsanordnung gegen die Vorspannung in einer Schliessposition verriegelbar und manuell entriegelbar ist, wobei der Schieber Bodenteile und eine Frontwand aufweist und wobei ein Hebeorgan vorgesehen ist, mittels dem der Aufzeichnungsträger mit einer Kante in der Oeffnungsposition derart vom Schieberbodenteil abhebbar ist, dass diese Kante oberhalb der Schieberfrontwand erfassbar ist, d a d u r c h  g e - k e n n z e i c h n e t , dass der Rahmen ein auf fünf Seiten geschlossenes, an die Abmessungen der unterzubringenden Aufzeichnungsträger angepasstes Gehäuse ist, dass der Schieber an mindestens einer Gehäuseinnenseite geführt ist, dass die Verriegelungsanordnung einenan den Schieber (oder das Gehäuse) angeformten, federnd auslenkbaren Riegel umfasst, der in der Schliessposition in einer Riegelfalle des Gehäuses (oder des Schiebers) eingerastet ist und manuell von der Frontwand her entriegelbar ist, und dass das Hebeorgan ein den Aufzeichnungsträger untergreifendes Stützteil ist, das in Richtung des Schieberhubs eine das unbehinderte Einführen eines entnommenen Aufzeichnungsträgers ermöglichende Abmessung aufweist.

2) Vorrichtung nach Anspruch 1, dadurch gekennzeichnet, dass das Hebeorgan einer Mehrzahl von Aufzeichnungsträgern zugeordnet ist.

3) Vorrichtung nach Anspruch 1, dadurch gekennzeichnet, dass das Hebeorgan mindestens eine Feder umfasst, mittels der der Aufzeichnungsträger in die abgehobene Position vorgespannt ist.

4) Vorrichtung nach Anspruch 3, dadurch gekennzeichnet, dass die Feder eine Blattfeder ist.

5) Vorrichtung nach Anspruch 3, dadurch gekennzeichnet, dass die Feder eine Drahtfeder ist.

6) Vorrichtung nach Anspruch 5, dadurch gekennzeichnet, dass die Feder einen tordierbaren Wickel umfasst, von dem sich ein Drahtende am Schieberboden, das andere gegen den Aufzeichnungsträger abstützt.

7) Vorrichtung nach Anspruch 3, dadurch gekennzeichnet, dass zwischen der Feder und dem Aufzeichnungsträger ein plattenartiges Bauteil vorgesehen ist.

8) Vorrichtung nach Anspruch 7, gekennzeichnet durch einen Anschlag zum Abstützen des auf dem Bauteil liegenden Aufzeichnungsträgers.

9) Vorrichtung nach Anspruch 1, dadurch gekennzeichnet, dass das Hebeorgan mindestens ein Plattenelement umfasst, das über eine Parallelogrammanordnung an den Schieber angelenkt ist.

- 3 -

0112436

10) Vorrichtung nach Anspruch 1, dadurch gekennzeichnet, dass das Gehäuse für eine Mehrzahl gestapelt übereinander in dichter Packung untergebrachter Compactdiscs bemessen ist, denen je ein eigenes Hebeorgan zugeordnet ist, und dass in der Oeffnungsposition alle Compactdiscs aufgefächert präsentiert sind.

11) Vorrichtung nach Anspruch 10, gekennzeichnet durch je einen plattenartigen Halter für je eine Disc.

12) Vorrichtung nach Anspruch 1 oder Anspruch 11, dadurch gekennzeichnet, dass die Federanordnung zwischen einer der Schieberfrontwand abgewandten Schieberrückplatte und einer Gehäuserückwand eingespannte Druckfederelemente umfasst.

13) Vorrichtung nach Anspruch 12, dadurch gekennzeichnet, dass die Druckfederelemente gegen Abknicken abgestützt sind.

14) Vorrichtung nach Anspruch 12, dadurch gekennzeichnet, dass die von den Druckfederelementen gespeicherte Kraft auf das Hebeorgan übertragbar und für dessen Betätigung ausreichend bemessen ist.

15) Vorrichtung nach Anspruch 1, dadurch gekennzeichnet, dass das Gehäuse im wesentlichen rechteckigen Grundriss aufweist und mehrere Aufzeichnungsträger in ihm parallel zu den grössten Gehäuseflächen gestapelt unterbringbar sind.

16) Vorrichtung nach nach Anspruch 1, gekennzeichnet durch einen im wesentlichen rahmenförmigen Schieber.

17) Vorrichtung nach Anspruch 11, dadurch gekennzeichnet, dass jeder Halter um eine sich parallel zur Schieberfrontwand erstreckende Achse schwenkbar ist.

18) Vorrichtung nach Anspruch 1, dadurch gekennzeichnet, dass das Stützteil den Aufzeichnungsträger mindestens an

- 4 -

0112436

einer Stelle untergreift, die zwischen der erfassbaren Kante und dem Schwerpunkt des Aufzeichnungsträgers liegt.

19)     Vorrichtung nach Anspruch 18, dadurch gekennzeichnet, dass das Stützteil sich von dem gehäuseinneren Ende des Schiebers bis kurz vor die Schieberfrontwand erstreckt.

**Fig.1**

_Fig. 2_

# Fig.3

Fig. 4

80

82

81

82

Fig. 5

80

83    84    75    -82-

Fig. 6

85    87    88

80

86    83    -82-

Fig. 7

90

80

-82-

89    91

5/7

0112436

Fig. 8

Fig. 9

Fig. 10 a

Fig. 10 b

Fig 12

Fig 11

Fig. 13

Fig. 14

Fig. 15

**Europäisches Patentamt**

**EUROPÄISCHER RECHERCHENBERICHT**

0112436

Nummer der Anmeldung

EP 83 10 8475

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y,A | US-A-4 275 943 (A. GELARDI et al.) <br> * Spalte 7, Zeile 54 - Spalte 8, Zeile 40; Spalte 10, Zeilen 22-54; Figuren 1, 2, 6, 7, 10, 11 * | 1,12, 14,15 | G 11 B 23/02 |
| | --- | | |
| Y,A | DE-A-2 917 806 (P. FLORJANCIC) <br> * Seite 9, Zeile 14 - Seite 12, Zeile 13; Figuren 1-3 * | 1,2,5 | |
| | --- | | |
| A | GB-A-2 077 234 (J. ALLISON) <br> * Seite 1, Zeile 57 - Seite 2, Zeile 15; Figuren 1, 4 * | 1,3,4 | |
| | --- | | |
| A | FR-A-2 180 811 (IDN) <br> * Ansprüche 1, 2 * | 1 | RECHERCHIERTE SACHGEBIETE (Int. Cl. ³) |
| | --- | | |
| A | DE-A-3 015 749 (IDN) | | G 11 B 1/02 <br> G 11 B 23/00 |
| | --- | | |
| A | US-A-4 191 292 (E.H. SCHWEIZER) | | |
| | ----- | | |

Der vorliegende Recherchenbericht wurde für alle Patentansprüche erstellt.

| Recherchenort <br> BERLIN | Abschlußdatum der Recherche <br> 30-01-1984 | Prüfer <br> ROGNONI M.G.L. |
|---|---|---|